(19) Europäisches Patentamt

European Patent Office

Office européen des brevets

(11) EP 1 431 165 B1

(12) EUROPEAN PATENT SPECIFICATION

(45) Date of publication and mention
of the grant of the patent:
**08.03.2006 Bulletin 2006/10**

(51) Int Cl.:
***B62D 55/104*** *(2006.01)*    ***B62M 27/02*** *(2006.01)*

(21) Application number: **03027775.0**

(22) Date of filing: **03.12.2003**

(54) **Suspension device, in particular for a snow vehicle, and snow vehicle**

Aufhängungsvorrichtung, insbesondere für Schneefahrzeuge, und Schneefahrzeug

Dispositif de suspension, notamment pour véhicule de neige, et véhicule de neige

(84) Designated Contracting States:
**FI SE**

(30) Priority: **20.12.2002 JP 2002369857**

(43) Date of publication of application:
**23.06.2004 Bulletin 2004/26**

(73) Proprietor: **YAMAHA HATSUDOKI KABUSHIKI KAISHA**
**Iwata-shi,**
**Shizuoka-ken 438-8501 (JP)**

(72) Inventor: **Yoshihara, Masanori**
**Iwata-shi,**
**Shizuoka-ken 438-8501 (JP)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**US-A- 5 667 031        US-A- 5 730 242**

• **PATENT ABSTRACTS OF JAPAN vol. 012, no. 067 (M-673), 2 March 1988 (1988-03-02) -& JP 62 214065 A (YAMAHA MOTOR CO LTD), 19 September 1987 (1987-09-19)**

**Description**

The invention relates to a suspension device for a vehicle, in particular a snow vehicle, comprising a slide rail for pressing a track belt against a riding surface, a front arm member and at least a front shock absorber interposed between said slide rail and a body of said vehicle. Further, the invention relates to a snow vehicle comprising a body frame and having an engine unit and a steering device mounted thereto.

Generally, a snow vehicle (which is referred to in general as snowmobile) is designed to run on uneven snow surfaces freely and is thus provided with a suspension device for absorbing shocks caused by unevenness of snow surfaces to improve riding comfort.

Such a conventional suspension device is known from US 5,667,031.

In such a suspension device, however, the range, within which the shock ratio (which is also referred to as lever ratio) representing the shock absorber stroke with respect to the unit stroke of the slide rail can be set, is narrow. For example, the suspension device has a degressive characteristic in which the increase rate of the shock absorber stroke decreases with increase of the rail stroke and bottoms out easily. Also, the range, from which the shock ratio of the shock absorber with respect to the rail stroke can be selected, is narrow, so that it is difficult to attain a stroke range in which the suspension device operates softly and a stroke range in which the suspension device can absorb energy at the same time.

It is, therefore, an object of the present invention to improve a suspension device of the above kind, in particular for a snow vehicle, which can improve riding comfort and does not bottom out easily.

It is further an object of the invention to provide a snow vehicle of the above kind with an improved riding characteristic.

This first object is solved in an inventive manner in that an intermediate portion of a first link is pivotably connected to the slide rail , a first end of said first link is connected to the front shock absorber, an end of a second link is secured to the point of pivot of the front arm member on the slide rail, the first and second links are connected via a third link.

Preferably, such a suspension device further comprises at least a rear arm member and at least a rear shock absorber interposed between said slide rail and said body, wherein said rear shock absorber is connected to an end of said third link.

According to a preferred embodiment of the suspension device, when letting "a", "b", "c", "d" and "f" be the connection point between the second link and the front arm member, the connection point between the second and third links, the connection point between the first and third links, the point of connection of the first link to the slide rail, and the connection point between the first link and the front shock absorber, respectively, the positional relation among the connection points "a", "b" and "d" is determined such that the distance Lc between the connection points "b" and "d" changes in a predetermined manner relative to an upward stroke S of the slide rail.

Preferably, the positional relation among the connection points "a", "b" and "d" is determined such that an arc with a radius ad (Ld = constant) and an arc with a radius bd (Lc = variable) are crossed with each other with increase of the upward stroke S of the slide rail.

According to a further embodiment of the suspension device, letting "a", "b", "c", "d" and "f" be the connection point between the second link and the front arm member, the connection point between the second and third links, the connection point between the first and third links, the connection point of the first link to the slide rail, and the connection point between the first link and the front shock absorber, respectively, the vertex angles and the side lengths of a triangle formed by connecting the connection points "b", "c" and "d" are determined such that each of the strokes of the front and rear shock absorbers and the directions of the strokes change in a predetermined manner.

Therein, preferably the connecting points "b", "c" and "d" are so arranged that the vertex angles "b" and "d" of the triangle "bcd" are always acute.

In such a suspension device, an end of a first arm pivoted to the slide rail is connected to the front shock absorber, an end of a second arm is secured to the point of pivot of the front arm member on the slide rail, an end of a third arm is connected to the rear shock absorber, and the first and second arms are connected via the third arm. Thus, by properly determining the positional relation among the connection points of the first to third arms, a shock ratio suitable for the stroke range of the slide rail can be realized and a progressive characteristic, by which a soft feeling and an anti-bottoming out property can be obtained, can be realized.

The positional relation among the connection point "a" between the second link and the front arm member, the connection point "b" between the second and third links, and the connection point "d" of the first link to the slide rail is determined such that the distance Lc between said connection points "b" and "d" changes in a predetermined manner relative to an upward stroke S of said slide rail. More specifically, the positional relation among the connection points "a", "b" and "d" is determined such that an arc with a radius ad (Ld = constant) and an arc with a radius bd (Lc = variable) are crossed with each other with increase of an upward stroke S of the slide rail. Thus, when the slide rail is moved upward, the length Lc decreases in the initial part of the stroke range and increases in the latter part of the stroke range.

Namely, in the initial part of the stroke range, since the length Lc becomes shorter, the operation rates of the front and rear shock absorbers, namely the contraction strokes of the shock absorbers per unit stroke of the slide rail is small. Thus, the spring reaction is small enough to provide a comfortable ride. In the latter part of the stroke range, since the length Lc becomes longer, the operation rates of the front and rear shock absorbers are large and the spring reaction is large. Namely, a progressive effect can be obtained.

As described before, the vertex angles and the side lengths of a triangle formed by connecting the connection point "a" between the second link and the front arm member, the connecting point "c" between the first and third links, and the connecting point "d" of the first link to the slide rail and the slid are determined such that each of the strokes of the front and rear shock absorbers and the directions of the strokes change in a predetermined manner. More specifically, the connecting points "a", "c" and "d" are so arranged that the vertex angles "b" and "d" of the triangle "bcd" are always acute.

Thus, the operation rates of the front and rear shock absorbers 32 and 33 exhibit similar tendencies relative to the change in the length Lc between the connection points "b" and "c". For example, the operation rates of the front and rear shock absorbers both become smaller when the length Lc becomes shorter, and become larger when the length Lc becomes longer. Thus, the front and rear spring reaction characteristics exhibit similar tendencies, and the body stability during running can be improved.

Further, the above object is solved for a snow vehicle of the above kind by further comprising a suspension unit according to at least one of the claims 1 to 6.

Preferred embodiments are subject to the respective subclaims.

In the following, the invention will be described in greater detail by means of embodiments with reference to the accompanying drawings, wherein:

Fig. 1   is a side view of a snow vehicle provided with a suspension device according to a first embodiment of the present invention;

Fig. 2   is a side view of the suspension device of the snow vehicle;

Fig. 3   is a side view of the suspension device;

Fig. 4   is a plan view of the suspension device;

Fig. 5   is a cross-sectional side view of a rear sliding arm of the suspension device;

Fig. 6   is a perspective view of a link mechanism of the suspension device;

Fig. 7   is a side view for explaining the operations of the link mechanism;

Fig. 8   is a cross sectional front view of a spring receiving bracket;

Figs. 9(a) to (c)   are views for explaining the operations of a torsion spring of the suspension device;

Fig. 10   is a characteristic curve showing the relation between the stroke of a slide rail and spring reaction force;

Fig. 11(a)   is a schematic view for explaining the reaction force of a torsion spring;

Fig. 11(b)   shows a formula for explaining the reaction force of a torsion spring;

Fig. 12   is a view illustrating the change in position of a spring receiving part of a torsion spring;

Fig. 13   is a characteristic curve showing the relation between the slide rail stroke and the spring reaction force in the case where the position of the spring receiving part is changed;

Figs. 14(a) and (b)   are schematic views illustrating the operations of a sliding arm;

Fig. 15   is a characteristic curve showing the relation between the slide rail stroke and the spring reaction force in the case where the sliding arm is provided;

Fig. 16                    is a schematic view illustrating the operations of the link mechanism;

Fig. 17                    is a characteristic curve showing the relation between the slide rail stroke and the shock ratio;

Fig. 18                    is a schematic view illustrating the operations of the link mechanism;

Fig. 19                    is a characteristic curve showing the relation between the slide rail stroke and the shock ratio;

Fig. 20                    is a schematic view illustrating the operations of the link mechanism;

Fig. 21                    is a characteristic curve showing the relation between the slide rail stroke and the shock ratio;

Fig. 22                    is a schematic view for explaining a second embodiment of the present invention;

Fig. 23                    is a characteristic curve showing the relation between the slide rail stroke and the spring reaction force in the second embodiment;

Fig. 24                    is a cross-sectional front view of a spring receiving part in the second embodiment; and

Fig. 25                    is a perspective view of a spring receiving part in the second embodiment.

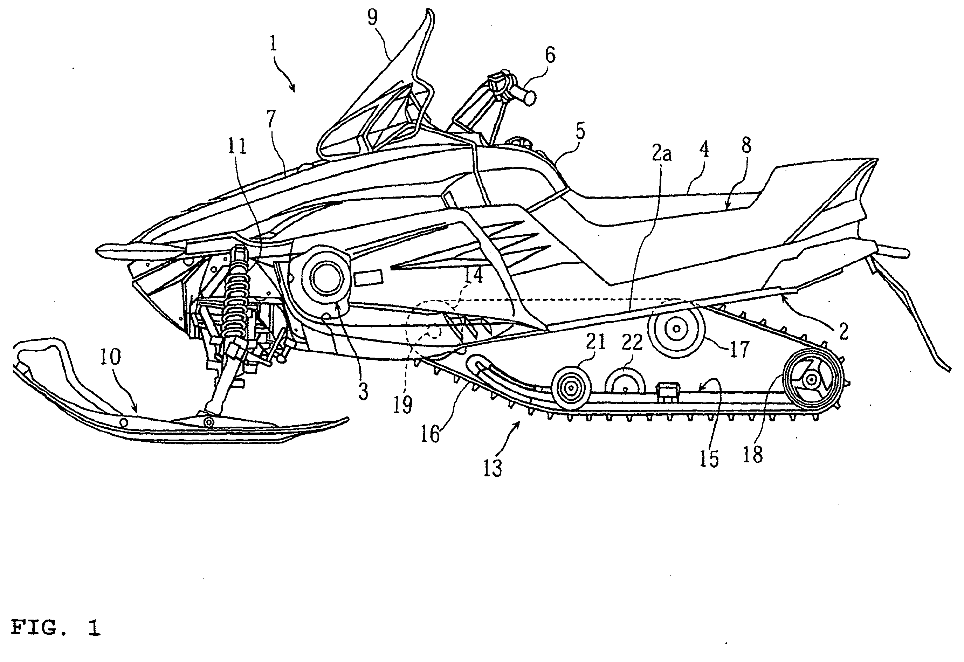

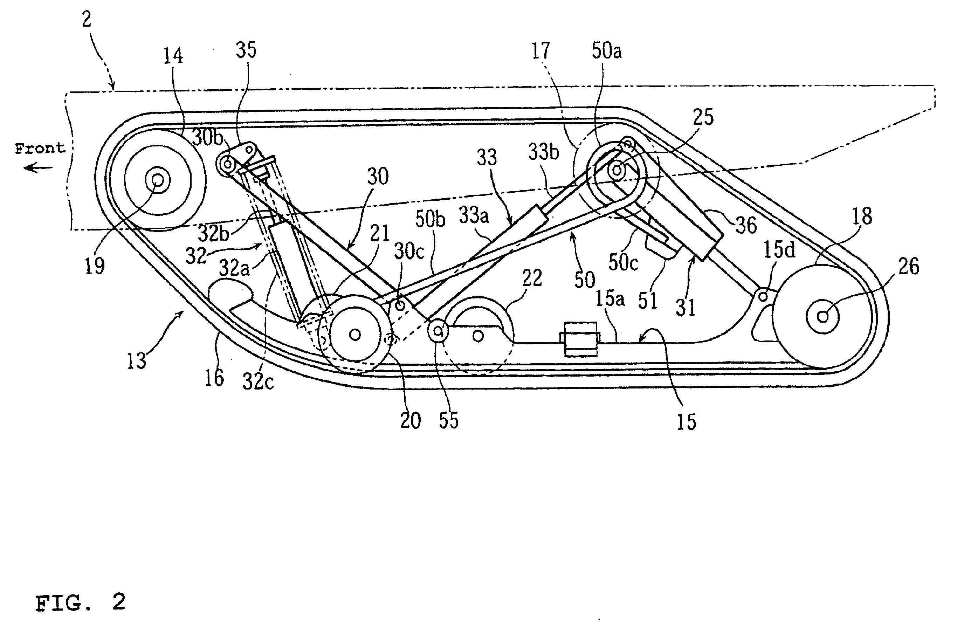

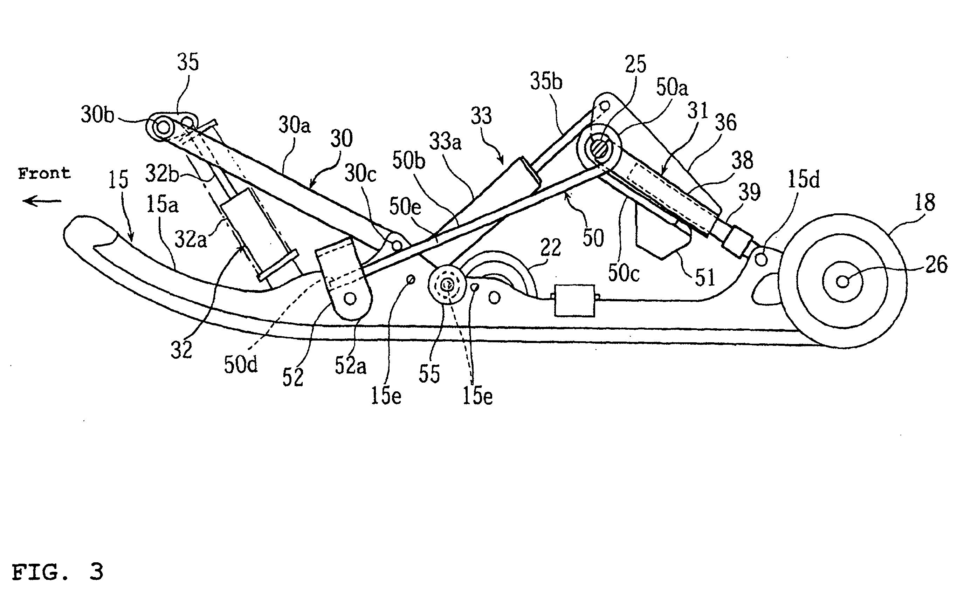

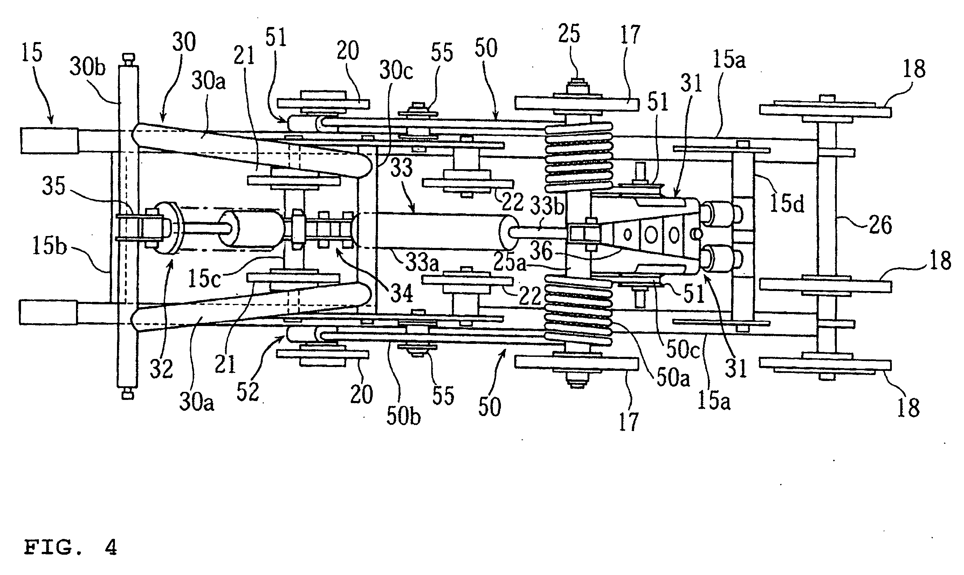

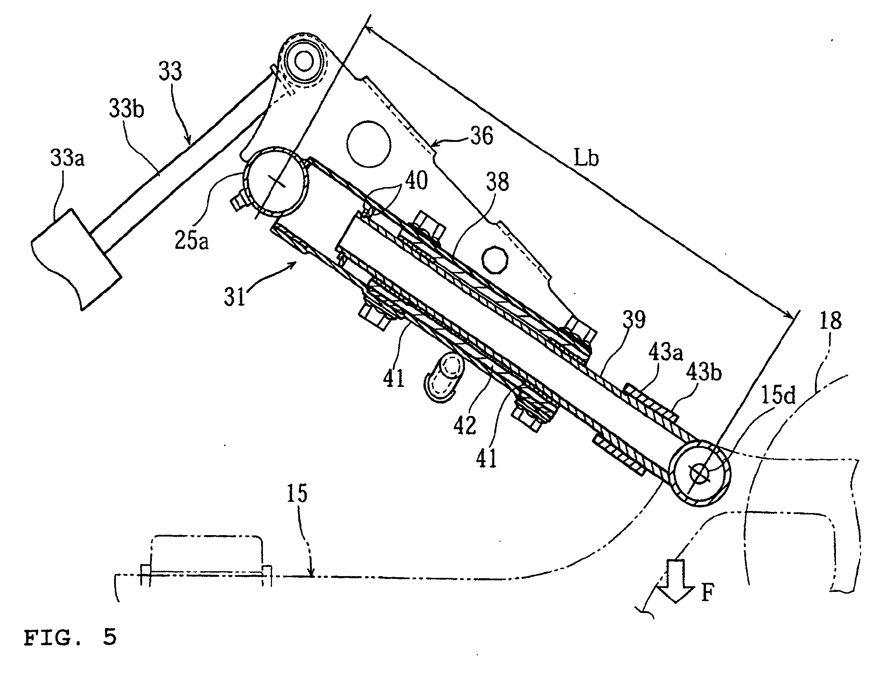

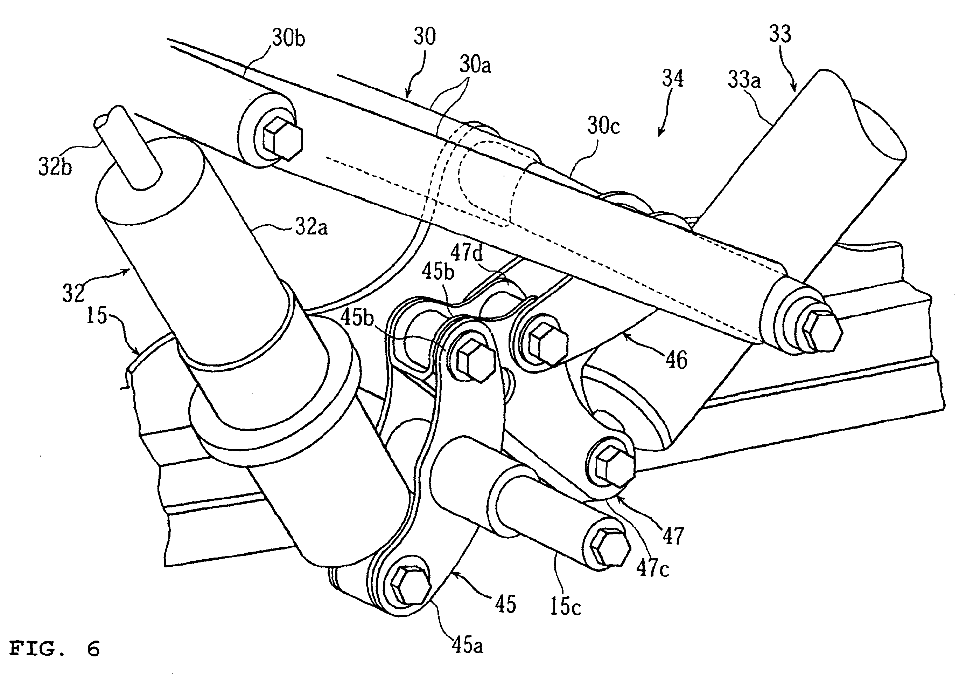

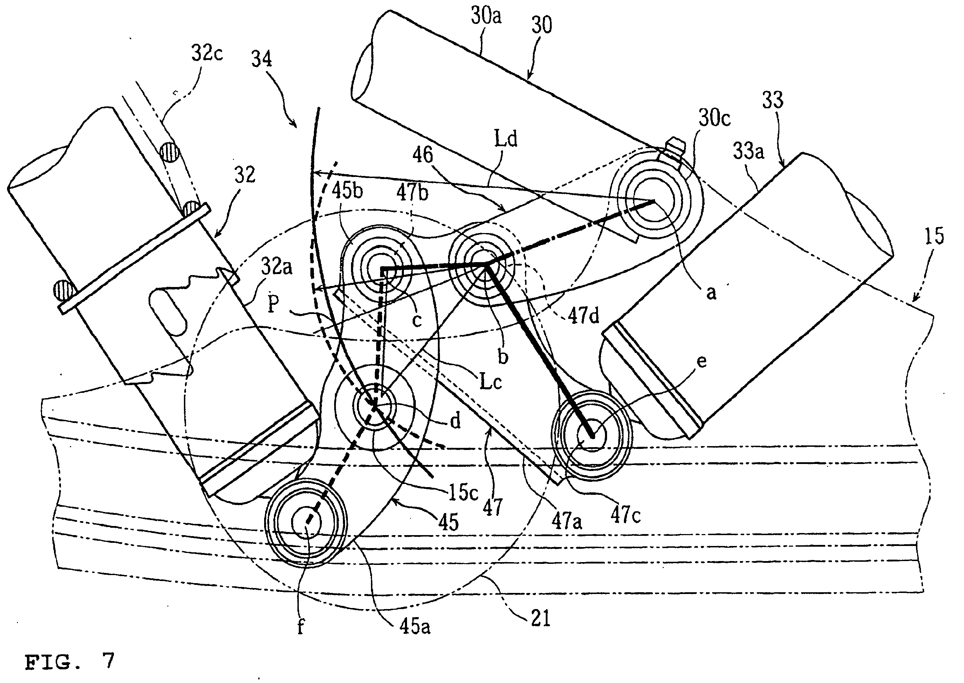

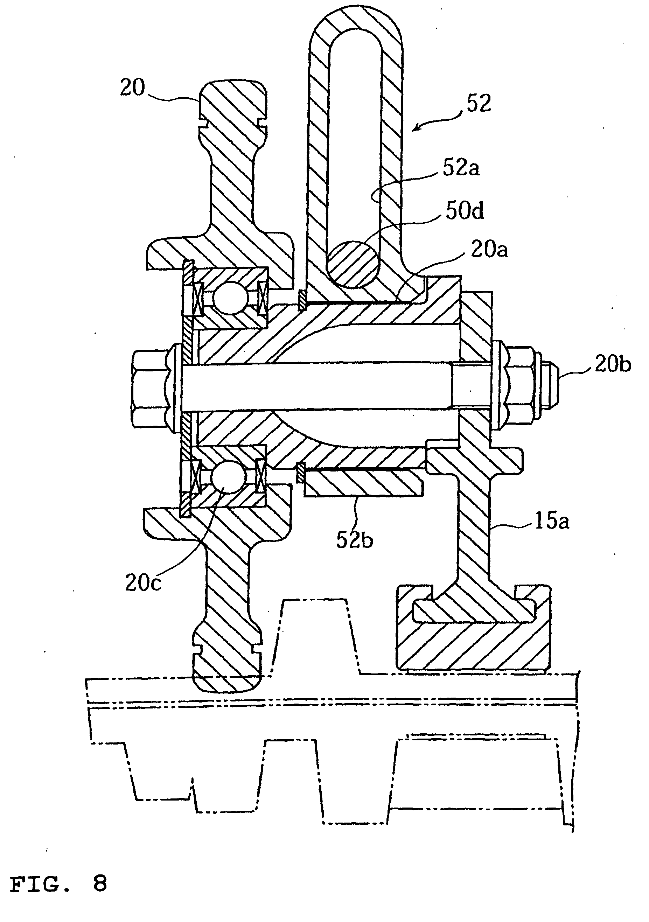

Fig. 1 to Fig. 8 are views for explaining a suspension device for a snow vehicle according to a first embodiment of the present invention. Fig. 1 is a side view of a snow vehicle, Fig. 2 is a side view of a driving track and a suspension device of the snow vehicle. Fig. 3 and Fig. 4 are a side view and a plan view, respectively, of the suspension device. Fig. 5 is a cross-sectional side view of a rear sliding arm. Fig. 6 and Fig. 7 are a perspective view and a side view, respectively, of a link mechanism for connecting front and rear shock absorbers. Fig. 8 is a cross-sectional front view of a spring member supporting part.

In Fig. 1, designated as 1 is a schematically illustrated snow vehicle (snowmobile) comprising a body frame 2, an engine unit 3 mounted on a front portion of the body frame 2, a saddle type seat 4 disposed on a rear portion of the body frame 2, a fuel tank 5 and a steering handle 6 disposed in front of the seat 4. Footrests 2a for supporting the rider's feet are formed on the body frame 2 on both right and left sides below the seat 4. A front portion of the body frame 2 is covered with a front cover 7 and a part of the body frame 2 below the seat 4 is surrounded by a side cover 8. A windshield 9 for blocking a head wind is disposed in front of the steering handle 6.

Steering skis 10 and 10 are disposed on both right and left sides of the front end of the body frame 2. Each of the steering skis 10 and 10 is supported by a front suspension device 11 for vertical swinging movement and steerable to the right and left with the steering handle 6.

A driving track 13 is located at the rear half of the body frame 2. The driving track 13 comprises a large-width track belt 16 entrained around a driving wheel 14, a slide rail 15, lower guide wheels 18 and upper guide wheels 17 and held in a generally parallelogram shape as a whole as viewed from a side.

When the engine unit 3 drives the driving shaft 19 of the driving wheel 14, the track belt 16 of the driving track 13 is rotated to drive the snow vehicle 1. The running direction of the snow vehicle 1 can be freely controlled by rotating the steering skis 10 to the right or left with the steering handle 6.

The slide rail 15 presses the track belt 16 against a snow surface and guiding it, and comprises a pair of right and left side rails 15a and 15a extending in the longitudinal direction of the vehicle, and front, intermediate and rear cross shafts 15b, 15c and 15d extending in the longitudinal direction of the vehicle, an upper arm shaft 30b and a wheel shaft 26 extending in the vehicle width direction which are joined generally in a grid pattern. On the slide rail 15, pairs of right and left guide pulleys 20, 21 and 22 for guiding and supporting a lower part of the track belt 16 are pivoted.

The right and left upper guide wheels 17 are mounted on a wheel shaft 25 secured to the body frame 2. The right and left lower guide wheels 18 are mounted on a wheel shaft 26 disposed at the rear ends of the right and left side rails 15a in a longitudinally adjustable manner.

A suspension device is interposed between the body frame 2 and the slide rail 5. The suspension device comprises a front suspension arm 30 for supporting the slide rail 15 for vertical swinging movement, rear sliding arms 31, front and rear shock absorbers 32 and 33 for reducing shocks from snow surfaces and absorbing vertical vibration, a link mechanism 34 connecting the front and rear shock absorbers 32 and 33, and a pair of right and left torsion springs 50. More specifically, the suspension device has the following constitution.

The front suspension arm 30, which extends rearward and downward from a front part of the vehicle, comprises right and left arm 30a and 30a and upper and lower arm shafts 30b and 30c extending in the vehicle width direction and joined to the upper and lower ends, respectively, of the right and left arms 30a and 30a by welding, and has a generally trapezoid configuration. The upper arm shaft 30b and the lower arm shaft 30c of the front suspension arm 30 are pivoted to the body frame 2 and slide rails 15, respectively.

The front shock absorber 32, which is located in front of the front suspension arm 30 and extends rearward and downward from a front part of the vehicle, comprises a cylinder 32a in which hydraulic oil is sealed, a piston rod 32b slidably inserted in the cylinder 32a via a damping mechanism (not shown), and a coil spring 32c interposed between the piston rod 32b and the cylinder 32a. The upper end of the piston rod 32b is rotatably connected to an end of a bracket 35, which is secured to the upper arm shaft 30b. The end of the bracket 35 is oriented toward the rear of the vehicle.

The rear shock absorber 33, which is disposed generally in symmetric relation to the front shock absorber 32 and extends upward toward the rear of the vehicle, comprises a cylinder 33a in which hydraulic oil is sealed and a piston rod 33b slidably inserted in the cylinder 33a via a dumping mechanism (not shown). The upper end of the piston rod 33b is rotatably connected to the upper end of a supporting bracket 36 secured to the rear sliding arms 31. The upper end of the supporting bracket 36 is located above the point of connection of the rear sliding arm 31 to the body.

Two rear sliding arms 31 are arranged on the right and left and disposed in generally parallel to the front suspension arm 30. The right and left rear sliding arms 31 are connected to each other via the supporting bracket 36 to enhance torsional rigidity about their axes.

As shown in Fig. 5, each of the rear sliding arms 31 comprises a cylindrical member 38 and a cylindrical sliding shaft 39 inserted in the cylindrical member 38 for relative movement in the direction of its axis so that an arm length Lb can be varied according to the vertical swinging strokes of the slide rail 15.

The upper end of the cylindrical members 38 is secured to a pipe 25a rotatably connected to the wheel shaft 25 secured to the body frame 2. The lower end of the sliding shaft 39 are rotatably connected to the rear cross pipe 15d secured to the slide rail 15. A bushing 42 is secured to the inside surface of the cylindrical members 38. A pair of front and rear bushes 41 and 41 are secured to the inside surface of the bushing 42 in sliding contact with the outside surface of the sliding shaft 39.

A plurality of shims 40 are attached to the upper end of the sliding shaft 39 in sliding contact with the inside surface of the cylindrical member 38. By increasing or decreasing the number of the shims 40, the maximum value of the length Lb of the sliding arm 31 can be adjusted. An adjusting nut 43a and a lock nut 43b are threaded on a lower part of the sliding shaft 39. By rotating the nuts 43a and 43b, the minimum value of the length Lb of the sliding arm 31 can be adjusted.

As shown in Fig. 6 and Fig. 7, the link mechanism 34 comprises a first link 45 to which the lower end of the front shock absorber 32 is rotatably connected, a second link 46 secured to the lower arm 30c of the front suspension arm 30, and a third link 47, which rotatably connects the first and second links 45 and 46, to which the rear shock absorber 33 is rotatably connected.

The first link 45 comprises a pair of right and left plates having an arcuate shape as viewed from a side and rotatably supported by the intermediate cross shaft 15c, namely by the slide rail 15. The first link 45 has a lower end 45a to which the cylinder 32a of the front shock absorber 32 is rotatably connected.

The third link 47 has a generally triangular shape as viewed from a side and has a base 47a having one end 47b, to which an upper end 45b of the first link 45 is rotatably connected, and the other end 47c to which the cylinder 33a of the rear shock absorber 33 is rotatably connected. The third link 47 has an apex 47d at the top of the triangle to which the front end of the second link 46 is rotatably connected.

The positional relation among a connection point "a" between the second link 46 and the front suspension arm 30, a connection point "b" between the second and third links 46 and 47, a connection point "c" between the first and third links 45 and 47, a connection point "d" of the first link 45, a connection point "f" between the first link 45 and the front shock absorber 32, and a connection point "e" between the third link 47 and the rear shock absorber 33 are determined as described in the following (1) to (3).

(1) By properly determining the positional relation among the connection points "a", "b" and "d", it is possible to freely determine the state of change in the distance Lc between the connection points "b" and "d" at an upward stroke S of the slide rail 15.

In this embodiment, for example, the positional relation among the connection points "a", "b" and "d" are determined such that an arc with a radius ad (Ld = constant) and an arc with a radius bd (Lc = variable) are crossed with each other with increase of the upward stroke S of the slide rail. This means that the length Lc decreases in an initial part of the stroke range of the slide rail 15 and increases in the latter part of the stroke range after a changing point P.

Namely, in the initial part of the stroke range, since the length Lc is decreased, the operation rates of the front and rear shock absorbers 32 and 33, namely the contraction stroke of the shock absorbers per unit stroke of the slide rail, is small. Thus, the spring reaction is small and a comfortable stroke feeling is obtained. In the latter part of the stroke range, since the length Lc is increased, the operation rates of the front and rear suspension arms 32 and 33 are large and the spring reaction is large. Namely, a progressive effect can be obtained.

(2) By properly determining the vertex angles and the side lengths of the triangle formed by connecting the connection points "b", "c" and "d", namely, by properly determining the position of the connection point "c", the strokes

5

of the front and rear shock absorbers 32 and 33 and the directions of the strokes can be changed.

In this embodiment, for example, the connection points "b", "c" and "d" are so arranged that the vertex angles "b" and "d" are always acute as shown in Fig. 7. Thus, the operation rates of the front and rear shock absorbers 32 and 33 both decreases when the length Lc becomes shorter and increases when the length Lc becomes longer.

(3) By properly determining a ratio R1 of the distance between the connection points "c" and "d" to the distance between the connection points "d" and "f", and a ratio R2 of the distance between the connection points "b" and "c" to the distance between the connection points "b" and "e", the displacement of the front and rear shock absorbers 32 and 33 can be changed.

The torsion springs 50 are located between the body frame 2, and the right and left side rails 15a, individually, and urge the slide rail 15 in a direction away from the body frame 2. Each of the torsion springs 50 is formed by winding a middle part of a rod-like spring body into a coil and has a coiled part 50a, a long side part 50b extending forward from the coiled part 50a and a short side part 50c extending rearward from the coiled part 50a.

The coiled part 50a of the torsion spring 50 is wound around the pipe 25a, and the short side part 50c is supported from below by a bracket 51 secured to a lower side of the rear sliding arm 31.

The long side part 50b has an extending end 50d supported from below by a spring receiving bracket 52 attached to the side rail 15a of the slide rail 15. The spring receiving bracket 52 has an ellipsoid supporting hole 52a having a major axis extending vertically and a lower portion 52b secured to and supported by a supporting shaft 20a of the guide wheels 20. The supporting shaft 20a is secured to the side rails 15a with bolts 20b and rotatably supports the guide wheels 20 via bearings 20c. The extending end 50d of the long side part 50b of the torsion spring 50 is supported by the bottom surface in the ellipsoid supporting hole 52 and vertically movable within the supporting hole 52.

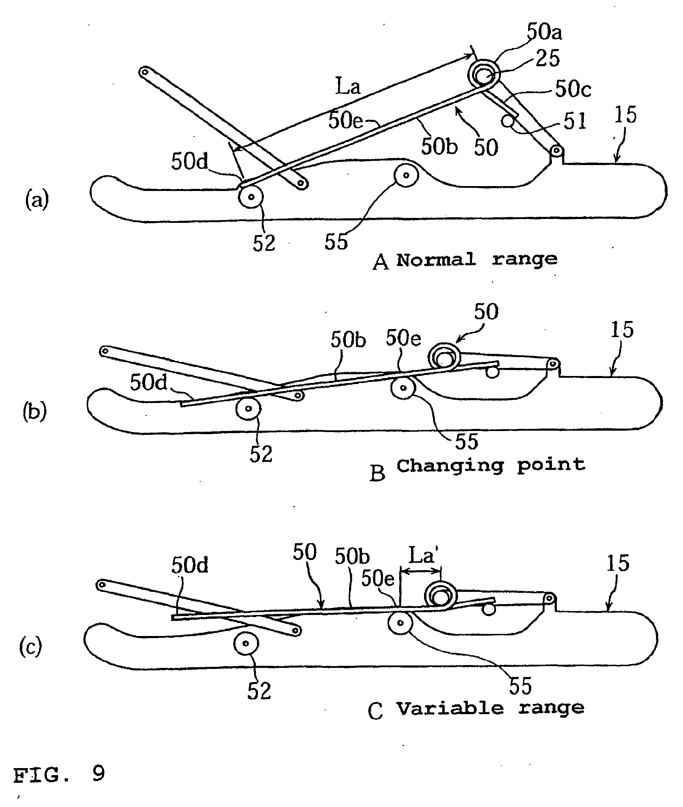

As shown in Fig. 3, each of the right and left side rails 15a has three spring receiving holes 15e at longitudinally spaced points. Each spring receiving hole 15e is located in a position higher than the one located rearward of it. A bobbin-shaped spring receiving member 55 comprising a circular rod and flanges provided at both ends of the rod is removably attached in each of the spring holes 15e at the center in the longitudinal direction. The spring receiving members 55 abut on longitudinal intermediate portions 50e of the long side parts 50b when the slide rail 15 strokes beyond a prescribed value in passing over a bump on a snow surface to change the spring reaction thereafter in a step-like manner as shown in Fig. 9.

The spring receiving members 55 may be attached in the front or rear spring receiving holes 15e depending upon the user's preference. When the spring receiving members 55 are located on the front side, the variation in spring reaction becomes small. When the spring receiving members 55 are located on the rear side, the variation in spring reaction becomes large. When attached in the front side, the spring receiving members 55 are located positions in slightly higher than when they are attached to the center and thus abut on the longitudinal intermediate portions 50e before the stroke of the slide rail 15 reaches the prescribed value. When attached to the rear side, the spring receiving members 55 abut on the longitudinal intermediate portions 50e after the stroke of the slide rail 15 has exceeded the prescribed value.

Descriptions will be made of the effects of this embodiment.

When the snow vehicle 1 runs on an uneven snow surface, the slide rail 15 strokes up and down about a connection point 30b where the front suspension arm 30 is connected to the body, and connection points 25 where the rear sliding arms 31 are connected to the body. At the same time, the front and rear shock absorbers 32 and 33 extend or contract, and impulsive forces are reduced and vibration is absorbed by spring reaction forces and damping forces generated by the extension and contraction of the shock absorbers 32 and 33.

In this embodiment, the front sliding arm 30, and the front and rear shock absorbers 32 and 33 are connected by the link mechanism 34 comprising the first link 45, to which the front shock absorber 32 is connected and which is pivoted to the slide rail 15, the second link 46 secured to the slide rail side pivot point of the sliding arm 30, and the third link 47, which connects the first and second links 45 and 46, to which the rear shock absorber 33 is connected. Thus, the shock ratio or the lever ratio, which is a ratio of the shock absorber stroke to the slide rail stroke, can be made suitable for the stroke range of the slide rail 15. Also, soft-touch stroke feeling can be obtained and bottoming out can be prevented.

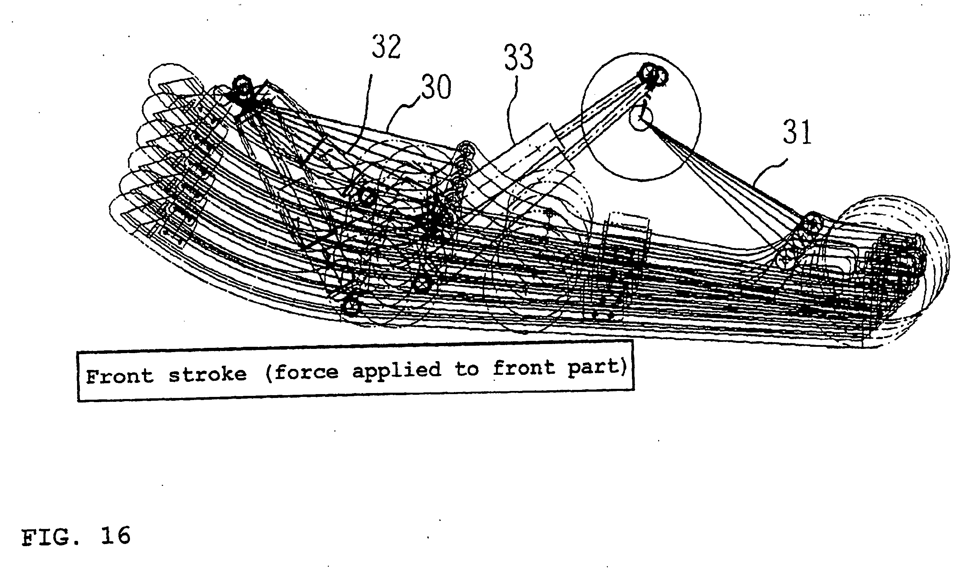

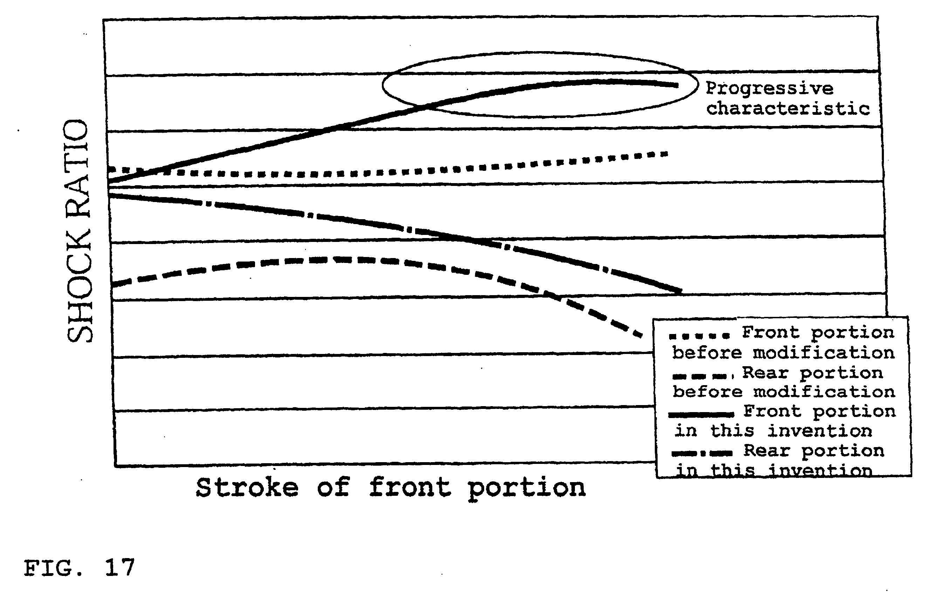

As shown in Fig. 16 and Fig. 17, when a force is applied to a front part of the slide rail 15 and a front portion of the slide rail 15 largely strokes, the shock ratio of the front shock absorber 32 (the stroke of the front shock absorber per unit stroke of the front portion of the slide rail) becomes larger as the stroke of the front portion of the slide rail becomes larger. This indicates that a progressive characteristic is obtained.

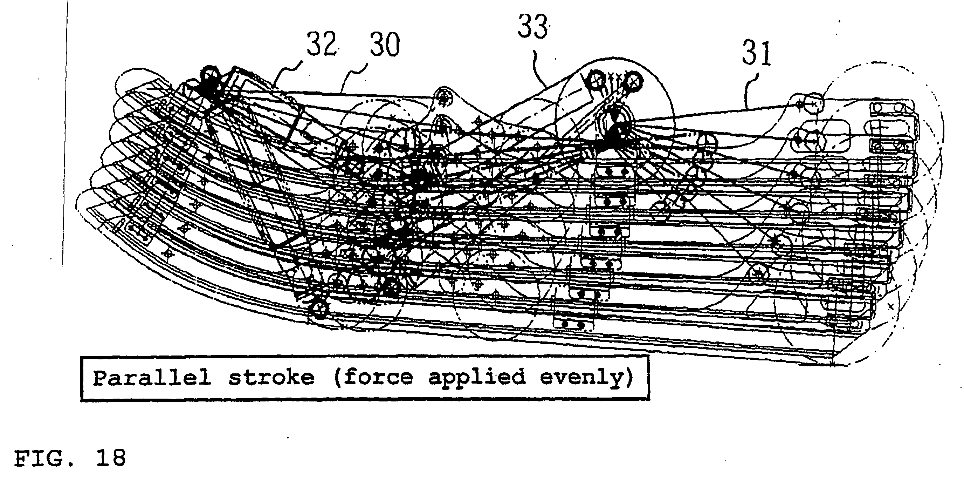

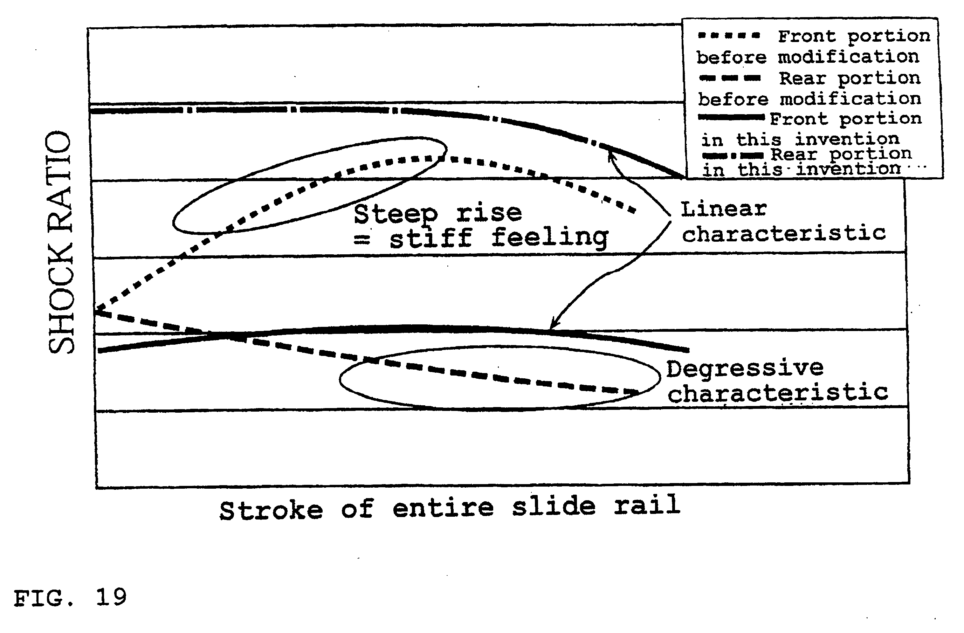

As shown in Fig. 18 and Fig. 19, when a force is applied evenly to the entire slide rail 15 and the entire slide rail 15 strokes evenly, the shock ratios of the front and rear shock absorbers 32 and 33 both exhibit a linear characteristic. Namely, the increasing rates of the strokes of the shock absorbers hardly change even when the stroke of the slide rail increases. This indicates that a soft stroke feeling is obtained.

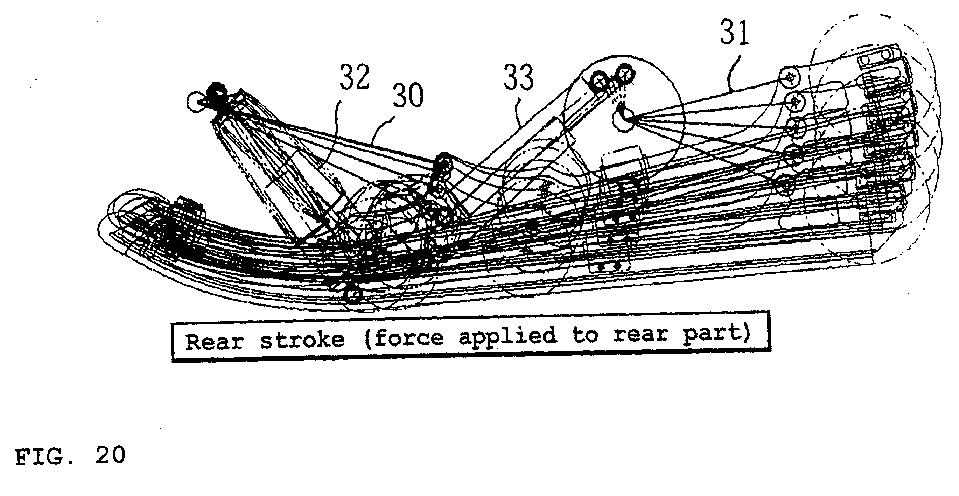

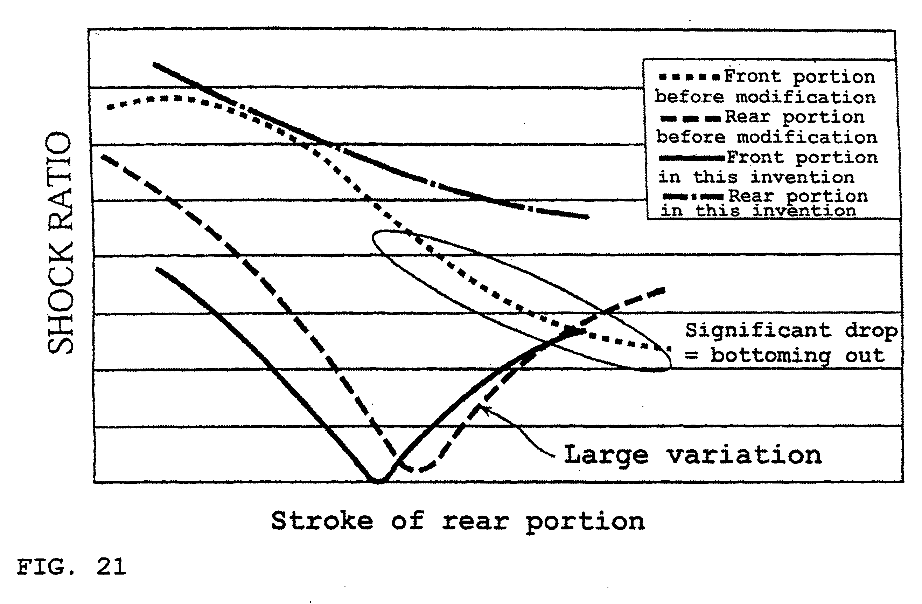

As shown in Fig. 20 and Fig. 21, when a force is applied to a rear part of the slide rail 15 and a rear portion of the slide rail 15 largely strokes, the drop in the shock ratio of the rear shock absorber 33 is decreased in this embodiment, which means that bottoming out can be prevented, although the shock ratio of the rear shock absorber is significantly lowered and bottoming out occurs easily before modification. Also, the variation range of the shock ratio of the front shock absorber 32 is decreased as compared with that before modification.

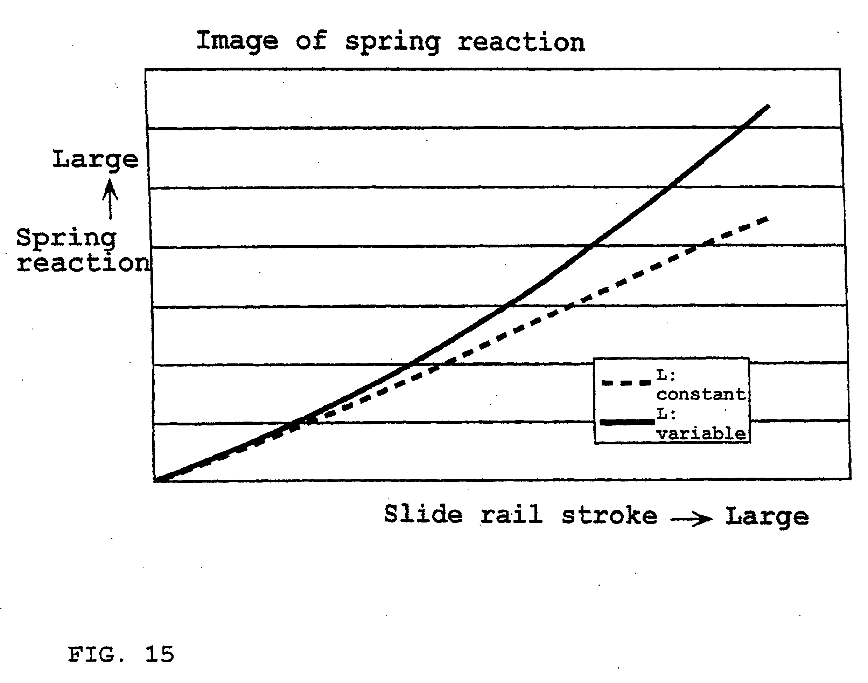

In this embodiment, each of the rear sliding arms 31 is constituted of the cylindrical member 38 and the sliding shaft 39 inserted in the cylindrical member 38 for relative movement in the direction of its axis so that the arm length Lb can be changed according to the strokes of the sliding rail 15. More specifically, the rear sliding arms 31 contract more largely and the effective arm length Lb is decreased as the stroke of the slide rail 15 is larger. Thus, as shown in Fig. 15, a soft stroke feeling can be obtained in the first half of the stroke of the slide rail 15. In the latter half of the stroke of the slide rail 15, the increasing rate of the spring reaction increases as the stroke becomes larger. As a result, riding comfort can be ensured and bottoming out can be prevented.

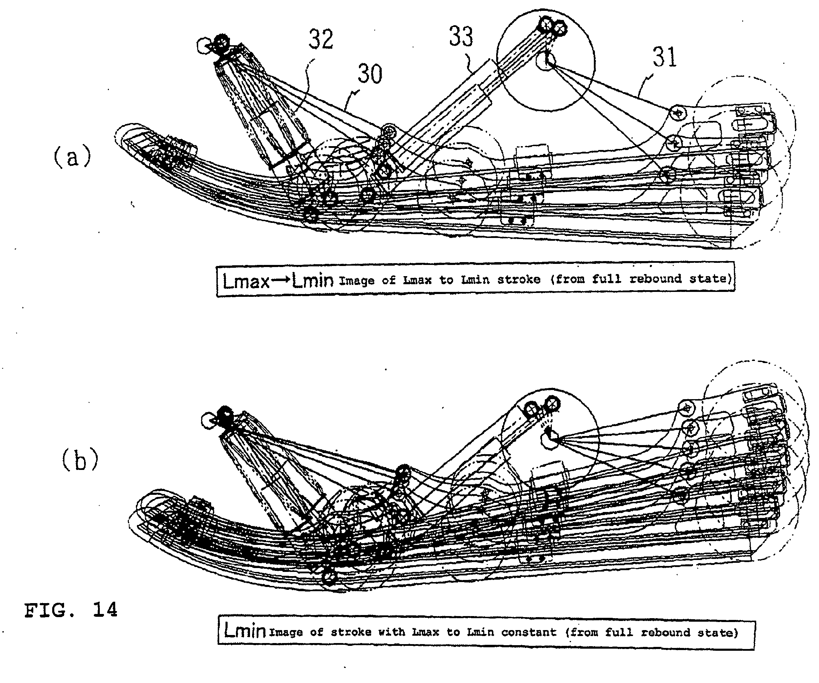

Fig. 14 shows images schematically illustrating the operations of the parts of the suspension device at the time when the side rail strokes from its full rebound state.

Fig. 14(a) shows a case in which a rear portion of the slide rail 15 largely strokes and the rear sliding arms 31 stroke from Lmax to Lmin. As shown in the drawing, as the stroke of the rear portion of the slide rail 15 becomes larger, the stroke of the rear shock absorber 33 increases. This indicates that the spring reaction of the rear shock absorber 33 exhibits a generally linear characteristic.

Fig. 14(b) shows a case in which a rear portion of the slide rail 15 largely strokes with the length of the rear sliding arms 31 held at Lmin. As shown in the drawing, as the stroke of the rear portion of the slide rail 15 becomes larger, the stroke of the rear shock absorber 33 increases more largely than that in the case shown in Fig. 14(a). This indicates that the spring reaction of the rear shock absorber 33 exhibits an aggressive characteristic.

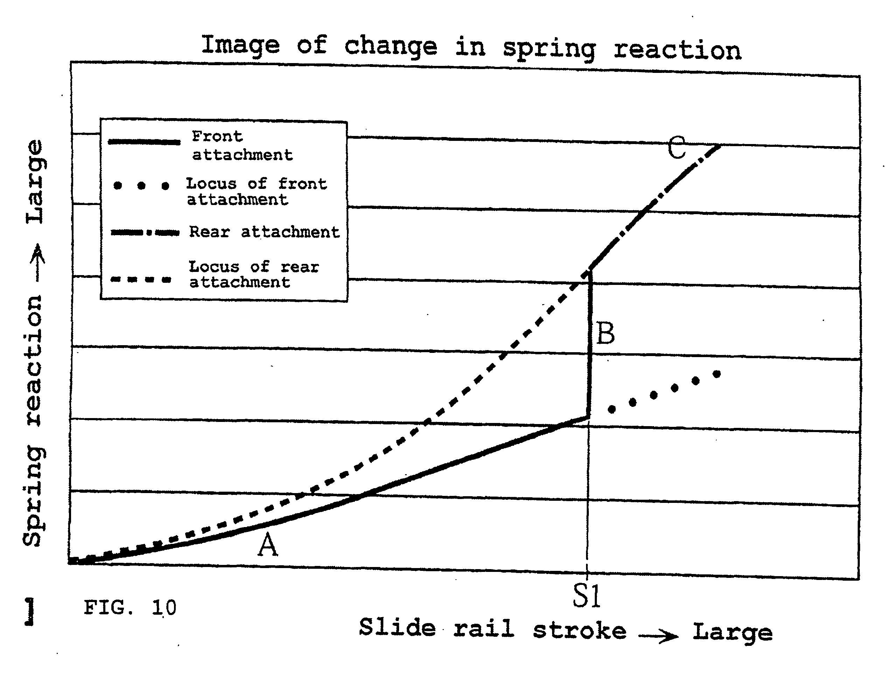

In this embodiment, the torsion springs 50 are elastically deformed in a twisted manner with an upward stroke of the slide rail 15 to absorb shocks. In this case, as shown in Fig. 9(a) to Fig. 9(c) and Fig. 10, when the upward stroke of the slide rail 15 is within a normal range, which is not greater than S1, the torsion springs 50 are elastically deformed with their extending ends 50d of the long side parts 50b supported on the spring receiving brackets 52. Thus, the spring reaction exhibits a characteristic A corresponding to the long arm length La of the long side part 50b. Namely, the suspension device exhibits a soft stroke feeling in which the spring reaction moderately increases with increase of the upward stroke of the slide rail 15 and can provide a comfortable ride.

When the upward stroke of the slide rail 15 reaches the prescribed value S1, the spring receiving parts 55 abut on the intermediate portions 50e of the long side parts 50b, and the spring reaction sharply increases in a step-like fashion as shown by the characteristic curve B. When the upward stroke of the slide rail 15 increases beyond S1, the long side parts 50b of the spring members 50 are elastically deformed by the spring receiving parts 55 as a supporting point, and the spring reaction exhibits a characteristic corresponding to the short arm length La' between its supporting point on the body and the spring receiving member 55. Namely, the spring reaction largely increases with increase of the upward stroke of the slide rail 15 as shown by the characteristic curve C. Thereby, the stroke feeling is stiff enough in the latter part of the stroke to prevent bottoming out.

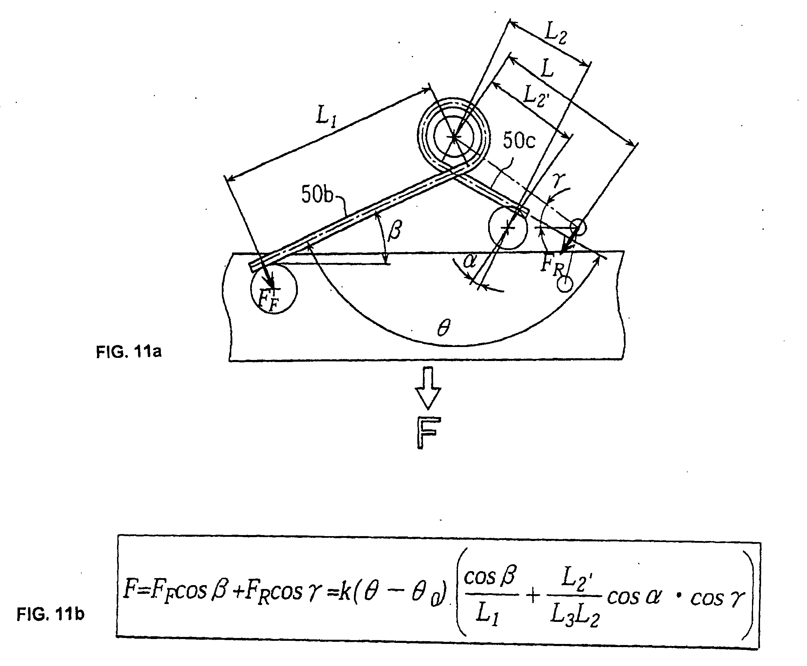

Letting L1, L2 and L3 be the arm length of the long side part of the torsion spring, the arm length of the short side part of the torsion spring and the length of the rear sliding arm, respectively, as shown in Fig. 11, the reaction F is obtained from the following equation:

$$F = F_F \cos \beta + F_R \cos \gamma$$
$$= k(\theta - \theta_0) [\cos \beta/L_1 + L_2'/L_3 L_2(\cos \alpha \cdot \cos \gamma)]$$

wherein $F_F$ is a force which the long side part 50b exerts on the supporting point, $\beta$ is the angle formed by the long side part 50b and a horizontal line, $F_R$ is a force which the short side part 50c exerts on the supporting point, $\gamma$ is the angle formed by the short side part 50c and a horizontal line, k is a constant, $\theta$ is the angle formed by the long side part 50b and the short side part 50c, and L1 and L2 are arm length of the long side part 50b and the short side part 50c, respectively.

It is apparent from the equation that as the arm length L1 of the long side part 50b is shorter, the spring reaction F is greater.

As has been described previously, in the suspension device of this embodiment, the short side parts 50c of the torsion springs 50 are supported by the rear sliding arms 31, the extending ends 50d of the long side parts 50b are supported by the spring receiving brackets 52, and there are provided the spring receiving members 55 which abut on the long side parts 50b when the slide rail 15 strokes (upward) to change the reaction characteristic of the torsion springs 50. Thus, when the stroke is within the normal range, which is not greater than S1, a soft stroke feeling corresponding to the long arm length La of the long side parts 50b is obtained. When the slide rail 15 is further moved upward, the long side parts 50b abut on the spring receiving members 55 and the torsion spring 50 exhibits a reaction characteristic corresponding to the short arm length La' with the spring receiving members 55 as a supporting point to prevent the slide rail 15 from bottoming out.

In this embodiment, the spring receiving holes 15e are formed in the slide rail 15 at longitudinally spaced points so that each of the spring receiving members 55 can be removably attached in one of the spring receiving holes 15e. Thus, the spring reaction characteristic can be changed depending upon the user's preference.

In this embodiment, the spring reaction characteristic can be changed by changing the positions of a pair of spring receiving members 55. In the present invention, however, a plurality pairs of spring receiving members may be provided. In this case, the spring reaction can be adjusted in a plurality of levels and the range within which the spring reaction characteristic can be selected can be widened.

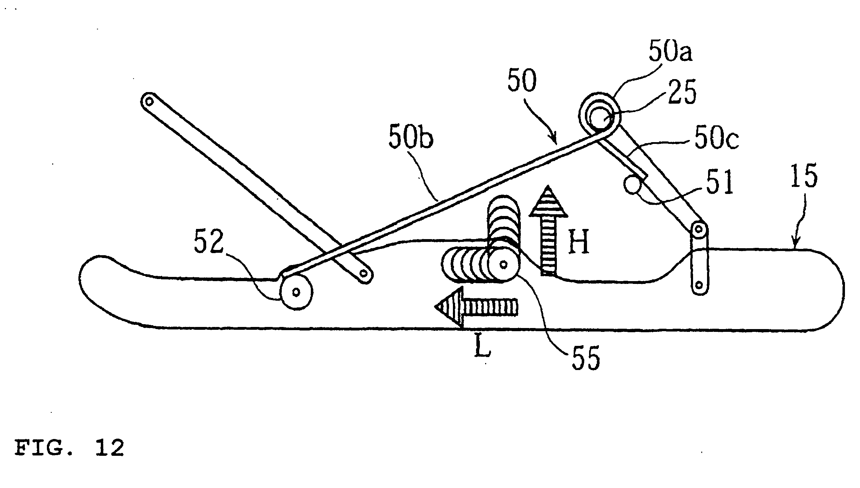

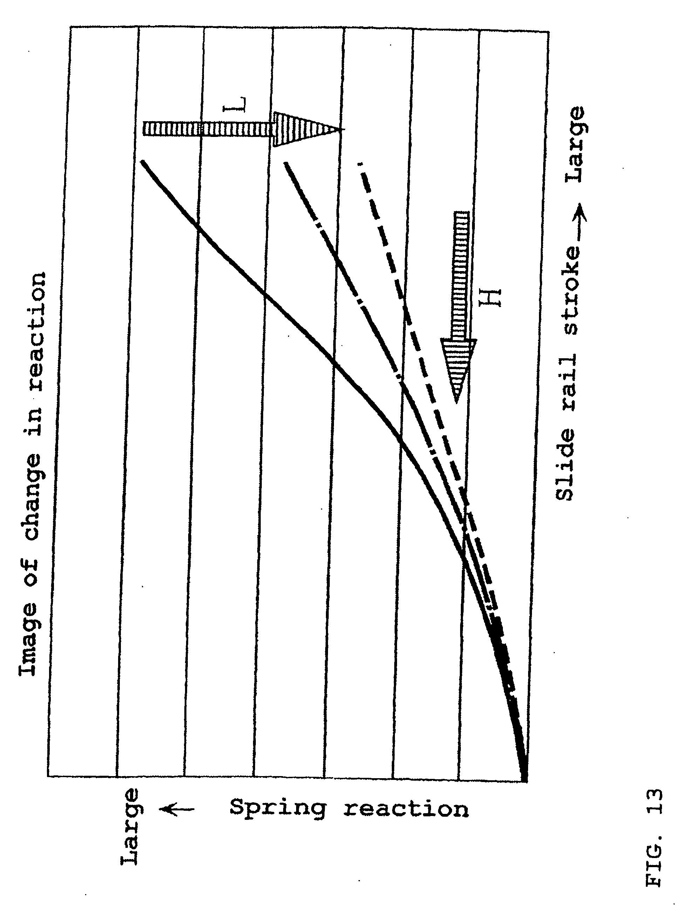

The positions of the spring receiving members 55 are not limited to those in the above embodiment, but may be changed depending upon the user's preference. As shown in Fig. 12 and Fig. 13, the positions of the spring receiving members 55 may be adjusted either or both in a vertical direction H and a longitudinal direction L in a continuous manner or in stages. In this case, the following effects can be obtained.

When the positions of the spring receiving members 55 can be adjusted in the vertical direction H, the stroke in which the spring reaction is varied can be changed. When the positions of the spring receiving members 55 can be adjusted in the longitudinal direction L, the variation in the spring reaction can be changed. Fig. 13 is an image for explaining the relation between the positions of the spring receiving members 55 and the spring characteristic. As the spring receiving members 55 are located higher and closer to the front, the spring reaction increases more moderately. As the spring receiving members 55 are located lower and closer to the rear, the spring reaction increased more sharply and the progressive effect is enhanced.

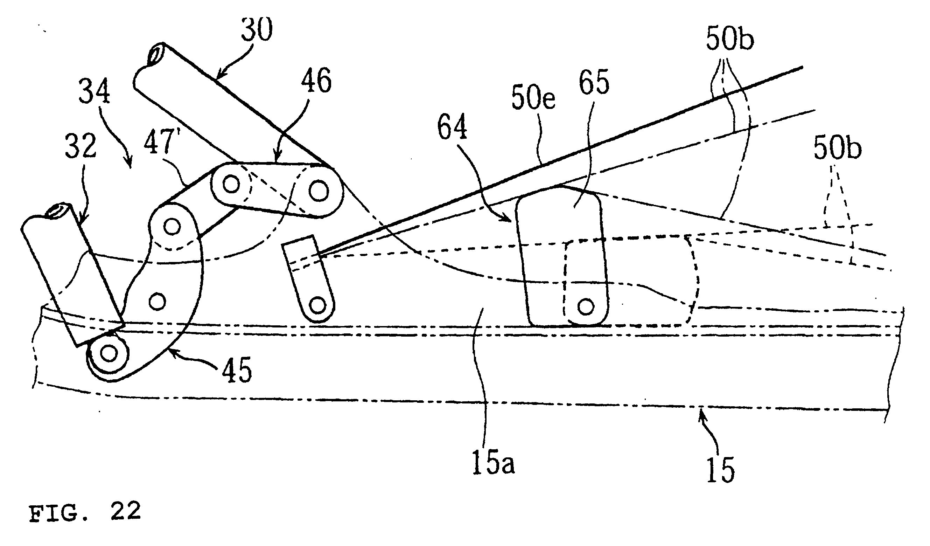

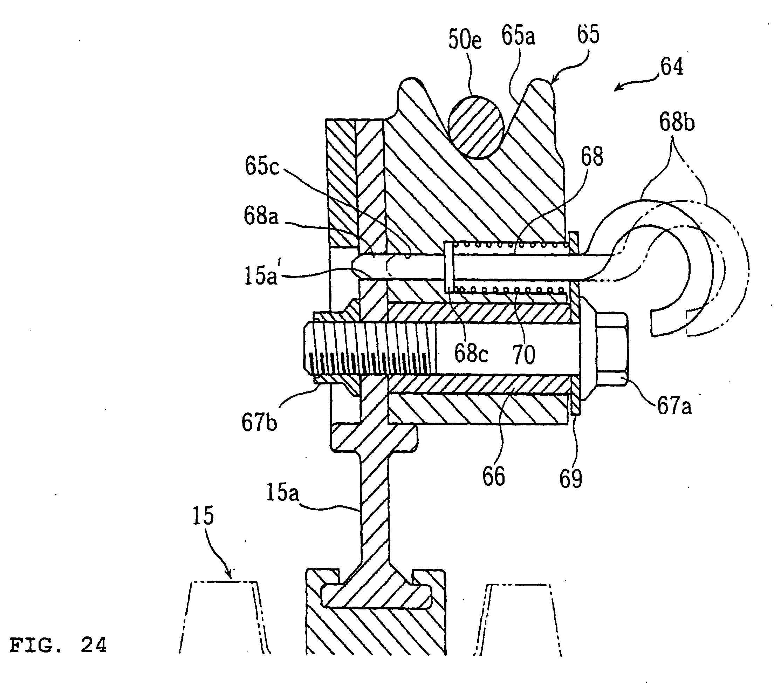

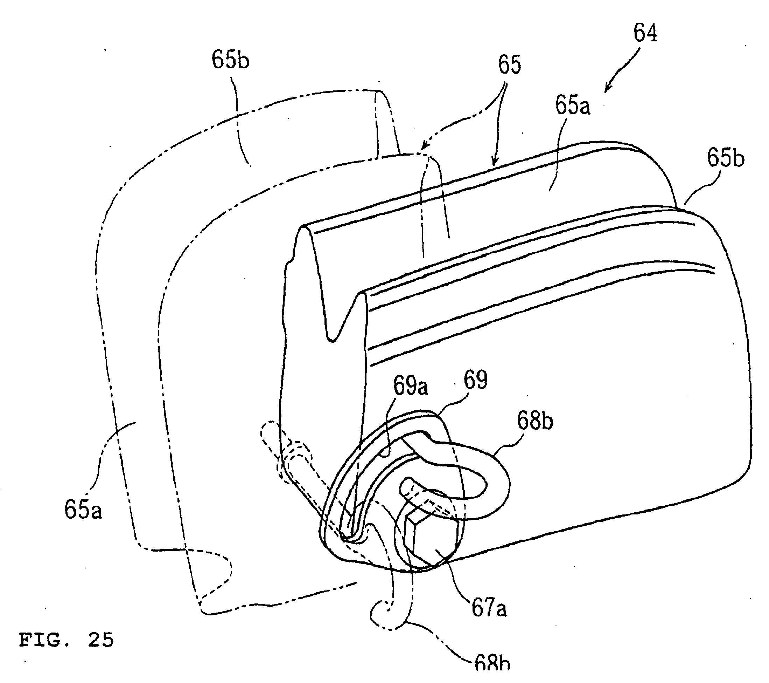

Fig. 22 to Fig. 25 are views for explaining a second embodiment. In the second embodiment, the spring reaction characteristic can be manually changed from one suitable for one-person riding to one suitable for two-person riding easily without a tool. In the figures, the same numerals as in Fig. 1 to Fig. 21 designate the same or corresponding parts.

The second embodiment has spring receiving parts 64 for supporting the intermediate portions 50e of the long side parts 50b of the torsion springs 50. The spring receiving parts 64 are movable between a vertical position and a horizontal position relative to the slide rail 15.

Each of the spring receiving parts 64 has a spring receiving block 65 made of aluminum alloy or the like and having a generally rectangular shape as viewed from a side. Each of the spring receiving block 65 has a long spring receiving groove 65a along one long side of said rectangle and a short spring receiving groove 65b continuing from the long spring receiving groove 65a along one short side thereof.

Each of the spring receiving blocks 65 is rotatably supported at the corner between the long and short sides, other than the sides in which the spring receiving grooves 65a and 65b are formed, on the side rail 15a. More specifically, the corner of the spring receiving block 65 is rotatably supported by a collar 66 secured to the side rail 15a by a bolt 67a and a nut 67b.

Each of the spring receiving blocks 65 has a lock hole 65c and a lock pin 68 inserted in the lock hole 65c. The lock pin 68 has a distal end 68a which can protrude from and retract into the spring receiving block 65 and be engageable in an engaging hole 15a' of the side rail 15a.

A guide plate 69 is disposed on the outside surface of each of the spring receiving blocks 65 and secured thereto by the bolt 67a. The lock pin 68 has a base end protruding outward from an arcuate guide slit 69 formed through the guide plate 69 and formed into a holding part 68a having an arcuate shape. The lock pin 68 is urged by an urging spring 70 in such a direction that the distal end 68a is engaged with the engaging hole 15a'.

In this embodiment, each of the spring receiving blocks 65 is positioned in its vertical position shown by solid lines in Fig. 22 when two persons ride the vehicle and rotated to its horizontal position shown by broken lines in Fig. 22 when one person rides the vehicle. This rotation operation is made by pulling the holding part 68b of the lock pin 68 against the urging force of the urging spring 70 to release the engagement between the lock pin 68 and the side rail 15a and rotating the lock pin 68 to the vertical or horizontal position. When the spring receiving block 65 is rotated to a prescribed position, the rock pin 68 is engaged into the engaging hole 15a' of the side rail 15a by the urging force of the urging spring 70, whereby the spring receiving block 65 is locked in the position.

As described previously, the spring receiving blocks 65 can be easily rotated between the vertical and the horizontal positions by a simple operation without a tool. The spring receiving blocks 65 in this embodiment may be locked in a plurality of positions between the vertical and horizontal positions.

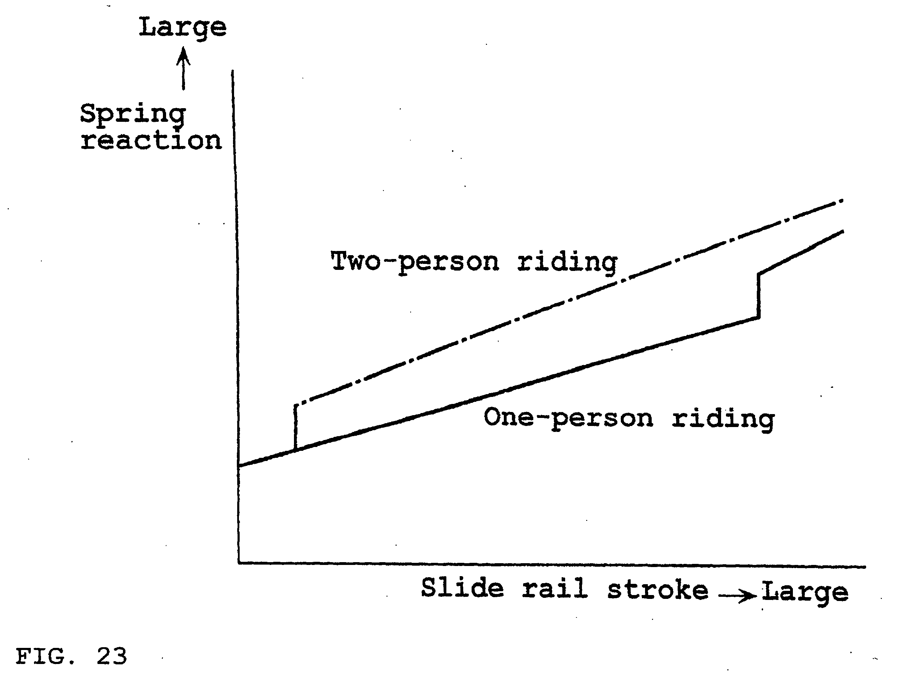

When two persons are going to ride the vehicle, each spring receiving block 65 is positioned in its vertical position. Then, the spring blocks 65 abut on the intermediate portions 50e of the torsion springs 50 when the slide rail 15 slightly strokes, for example, in a no-load state where the slide rail 15 does not stroke (which will be hereinafter referred to as 1G) such as when nobody rides the vehicle. Thus, the spring reaction exhibits a characteristic as shown by a dot-dash-line in Fig. 23. Thereby, the spring reaction in 1G is increased and the spring constant of the suspension system is increased so that a large load of two persons can be supported. In addition, the load balance can be changed such that a larger load is applied to the rear side.

When one person is going to ride the vehicle, each spring receiving block 65 is positioned in its horizontal position. Then, the spring receiving blocks 65 abut on the intermediate portions 50e of the torsion springs 50 when the stroke of the slide rail 15 reaches a point close to its maximum value. Thereby, the spring reaction exhibits a characteristic as shown by a solid line in Fig. 23. Namely, in most of the stroke range of the slide rail 15, the spring reaction is small enough and the stroke characteristic is soft enough to provide a comfortable ride. In a range close to the maximum stroke, the spring reaction sharply increases to prevent bottoming out.

Although both the front and rear shock absorbers 32 and 33 are connected to the link mechanism 34 in the first embodiment, only the front shock absorber 32 may be connected to the link mechanism 34 in the present invention as shown in Fig. 22.

In the example shown in Fig. 22, the first link 45 connected to the front shock absorber 32 and the second link 46 connected to the front suspension arm 34 are connected by a strip-like third link 47', and the rear shock absorber 33 is not connected to the third link 47'. The rear shock absorber 33 is connected to the side rails 15a.

As described above, in order to provide a suspension device for a snow vehicle which can improve riding comfort and does not bottom out, a suspension device, in particular for a snow vehicle is proposed comprising: a slide rail 15 disposed below a body frame 2 for pressing a track belt against a road surface and guiding the same, front and rear arm members 30 and 31 for supporting the slide rail by a body for vertical swinging movement, and front and rear shock absorbers 32 and 33 interposed between the slide rail 15 and the body frame 2, wherein an end of a first link 45 pivoted to the slide rail 15 is connected to the front shock absorber, an end of a second link is secured to the point of pivot of the front arm member on the slide rail, the first and second links 45 and 46 are connected via a third link 47, and the rear shock absorber is connected to an end of the third link 47.

**Claims**

1. Suspension device for a vehicle, in particular a snow vehicle, comprising:

   a slide rail (15) for pressing a track belt (16) against a riding surface,
   a front arm member (30) and at least a front shock absorber (32) both interposed between said slide rail (15) and a body (2) of said vehicle, whereby said front arm member (30) is pivotally connected to said slide rail (15)

   **characterized in that**
   an intermediate portion of a first link (45) is pivotally connected to said slide rail (15), a first end of said first link (45) is connected to said front shock absorber (32), an end of a second link (46) is secured to the point of pivot of said front arm member (30) on said slide rail (15), and said first and second links (45,46) are connected via a third link (47).

2. Suspension device according to claim 1, **characterized by** further comprising at least a rear arm member (31) and at least a rear shock absorber (33) interposed between said slide rail (15) and said body (2), wherein said rear shock absorber (33) is connected to an end of said third link (47).

3. Suspension device according to claim 1 or 2, **characterized in that** letting "a" be the connection point between said second link (46) and said front arm member (30), "b" be the connection point between said second link (46) and said third link (47), "c" be the connection point between said first link (45) and said third link (47), "d" be the connection point between said first link (45) and said slide rail (15),and "f" be the connection point between said first link (45) and said front shock absorber (32), the positional relation among said connection points "a", "b" and "d" is determined such that a distance (Lc) between said connection points "b" and "d" changes in a predetermined manner relative to an upward stroke (S) of said slide rail.

4. Suspension device according to claim 3, **characterized in that** the positional relation among said connection points "a", "b" and "d" is determined such that an arc with a radius (ad) (Ld = constant) and an arc with a radius (bd) (Lc = variable) are crossed with each other with increase of said upward stroke S of said slide rail.

5. Suspension device according to at least one of the claims 2 to 4, **characterized in that** letting "a" be the connection point between said second link (46) and said front arm member (30), "b" be the connection point between said second link (46) and said third link (47), "c" be the connection point between said first link (45) and said third link (47), "d" be the connection point of said first link (45) to said slide rail (15), and "f" be the connection point between said first link (45) and said front shock absorber (32), the vertex angles and the side lengths of a triangle formed by connecting the connection points "b", "c" and "d" are determined such that each of the strokes of said front and/or rear shock absorber (32,33) and the directions of said strokes change in a predetermined manner.

6. Suspension device according to claim 5, **characterized in that** said connecting points "b", "c" and "d" are so arranged that the vertex angles "b" and "d" of said triangle "bcd" are always acute.

7. Snow vehicle comprising a body frame (2) and having an engine unit (3) and a steering device (6,10,11) mounted thereto, **characterized by** further comprising a suspension device according to at least one of the claims 1 to 6.

**Patentansprüche**

1. Aufhängungsvorrichtung für ein Fahrzeug, insbesondere ein Schneefahrzeug, die umfasst:

   eine Gleitschiene (15), die einen Spurriemen (16) an eine Gleitfläche drückt,
   ein vorderes Armelement (30) und wenigstens einen vorderen Stoßdämpfer (32), die beide zwischen der Gleitschiene (15) und einer Karosserie (2) des Fahrzeugs angeordnet sind, wobei das vordere Armelement (30) schwenkbar mit der Gleitschiene (15) verbunden ist, **dadurch gekennzeichnet, dass**:

   ein Mittelabschnitt eines ersten Verbindungsgliedes (45) schwenkbar mit der Gleitschiene (15) verbunden ist, ein erstes Ende des Verbindungsgliedes (45) mit dem vorderen Stoßdämpfer (32) verbunden ist, ein Ende eines zweiten Verbindungsgliedes (46) mit einem Schwenkpunkt des vorderen Armelementes (30) an der Gleitschiene (15) verbunden ist und das erste sowie das zweite Verbindungsglied (45, 46) über ein drittes Verbindungsglied (47) verbunden sind.

2. Aufhängungsvorrichtung nach Anspruch 1, **dadurch gekennzeichnet, dass** sie des Weiteren wenigstens ein hinteres Armelement (31) und wenigstens einen hinteren Stoßdämpfer (33) umfasst, die zwischen der Gleitschiene (15) und der Karosserie (2) angeordnet sind, wobei der hintere Stoßdämpfer (33) mit einem Ende des dritten Verbindungsgliedes (47) verbunden ist.

3. Aufhängungsvorrichtung nach Anspruch 1 oder 2, **dadurch gekennzeichnet, dass**, wenn "a" der Verbindungspunkt zwischen dem zweiten Verbindungsglied (46) und dem vorderen Armelement (30) ist, "b" der Verbindungspunkt zwischen dem zweiten Verbindungsglied (46) und dem dritten Verbindungsglied (47) ist, "c" der Verbindungspunkt zwischen dem ersten Verbindungsglied (45) und dem dritten Verbindungsglied (47) ist, "d" der Verbindungspunkt zwischen dem ersten Verbindungsglied (45) und der Gleitschiene (15) ist und "f" der Verbindungspunkt zwischen dem ersten Verbindungsglied (45) und dem vorderen Stoßdämpfer (32) ist, die Positionsbeziehung zwischen den Verbindungspunkten "a", "b" und "d" so bestimmt ist, dass sich ein Abstand (Lc) zwischen den Verbindungspunkten "b" und "d" auf vorgegebene Weise relativ zu einem Aufwärtshub (S) der Gleitschiene ändert.

4. Aufhängungsvorrichtung nach Anspruch 3, **dadurch gekennzeichnet, dass** die Positionsbeziehung zwischen den Verbindungspunkten "a", "b" und "d" so bestimmt ist, dass ein Kreisbogen mit einem Radius (ad) (Ld = konstant) und ein Kreisbogen mit einem Radius (bd) (Lc = veränderlich) einander bei Zunahme des Aufwärtshubes (S) der Gleitschiene schneiden.

5. Aufhängungsvorrichtung nach wenigstens einem der Ansprüche 2 bis 4, **dadurch gekennzeichnet, dass**, wenn "a" der Verbindungspunkt zwischen dem zweiten Verbindungsglied (46) und dem vorderen Armelement (30) ist, "b" der Verbindungspunkt zwischen dem zweiten Verbindungsglied (46) und dem dritten Verbindungsglied (47) ist, "c" der Verbindungspunkt zwischen dem ersten Verbindungsglied (45) und dem dritten Verbindungsglied (47) ist, "d" der Verbindungspunkt des ersten Verbindungsgliedes (45) mit der Gleitschiene (15) ist und "f" der Verbindungspunkt zwischen dem ersten Verbindungsglied (45) und dem vorderen Stoßdämpfer (32) ist, die Scheitelwinkel und Seitenlängen eines Dreiecks, das gebildet wird, indem die Verbindungspunkte "b", "c" und "d" verbunden werden, so bestimmt sind, dass sich jeder der Hübe des vorderen und/oder hinteren Stoßdämpfers (32, 33) und die Richtungen der Hübe auf vorgegebene Weise ändern.

6. Aufhängungsvorrichtung nach Anspruch 5, **dadurch gekennzeichnet, dass** die Verbindungspunkte "b", "c" und "d" so angeordnet sind, dass die Scheitelwinkel "b" und "d" des Dreiecks "bcd" stets spitz sind.

7. Schneefahrzeug, das einen Karosserierahmen (2) umfasst und eine Motoreinheit (3) sowie eine Lenkvorrichtung (6, 10, 11) hat, die daran angebracht sind, **dadurch gekennzeichnet, dass** es des Weiteren eine Aufhängungsvorrichtung nach wenigstens einem der Ansprüche 1 bis 6 umfasst.

**Revendications**

1. Dispositif de suspension pour un véhicule, notamment pour véhicule de neige, comprenant :

   une glissière (15) servant à presser une chenille (16) contre une surface de roulage,
   un élément de bras avant (30) et au moins un amortisseur avant (32) tous deux interposés entre ladite glissière (15) et un corps (2) dudit véhicule, dans lequel ledit élément d'arbre avant (30) est raccordé de manière pivotante à ladite glissière (15) **caractérisé en ce qu'**une partie intermédiaire d'un premier lien (45) est raccordée de manière pivotante à ladite glissière (15), une première extrémité dudit premier lien (45) est raccordée audit amortisseur avant (32), une extrémité d'un deuxième lien (46) est fixée au point de pivot dudit élément d'arbre avant (30) sur ladite glissière (15) et lesdits premier et deuxième liens (45, 46) sont raccordés via un troisième lien (47).

2. Dispositif de suspension selon la revendication 1, **caractérisé en ce qu'**il comprend au moins un élément de bras arrière (31) et au moins un amortisseur arrière (33) interposés entre ladite glissière (15) et ledit corps (2), dans lequel ledit amortisseur arrière (33) est raccordé à une extrémité dudit troisième lien (47).

3. Dispositif de suspension selon la revendication 1 ou 2, **caractérisé en ce que** « a » étant le point de raccordement entre ledit deuxième lien (46) et ledit élément de bras avant (30), « b » étant le point de raccordement entre ledit deuxième lien (46) et ledit troisième lien (47), « c » étant le point de raccordement entre ledit premier lien (45) et ledit troisième lien (47), « d » étant le point de raccordement entre ledit premier lien (45) et ladite glissière (15) et « f » étant le point de raccordement entre ledit premier lien (45) et ledit amortisseur avant (32), le rapport de position entre lesdits points de raccordement « a », « b » et « d » est déterminé de manière à ce qu'une distance (Lc) entre lesdits points de raccordement « b » et « d » change d'une manière prédéterminée par rapport à une course (S) de ladite glissière de guidage.

4. Dispositif de suspension selon la revendication 3, **caractérisé en ce que** le rapport de position entre lesdits points de raccordement « a », « b » et « d » est déterminé de manière à ce qu'un arc avec un rayon (ad) (Ld = constant) et un arc avec un rayon (bd) (Lc = variable) se croisent mutuellement avec une augmentation de ladite course vers le haut S de ladite glissière.

5. Dispositif de suspension selon l'une des revendications 2 à 4, **caractérisé en ce que** « a » étant le point de raccordement entre ledit deuxième lien (46) et ledit élément de bras avant (30), « b » étant le point de raccordement entre ledit deuxième lien (46) et ledit troisième lien (47), « c » étant le point de raccordement entre ledit premier lien (45) et ledit troisième lien (47), « d » étant le point de raccordement entre ledit premier lien (45) et ladite glissière (15) et « f » étant le point de raccordement entre ledit premier lien (45) et ledit amortisseur avant (32), les angles au sommet et les longueurs de côtés d'un triangle formé par le raccordement des points de raccordement « b », « c » et « d » sont déterminés de manière à ce que chacune des courses dudit amortisseur avant et/ou arrière (32, 33) et les directions desdites courses changent d'une manière prédéterminée.

6. Dispositif de suspension selon la revendication 5, **caractérisé en ce que** lesdits points de raccordement « b », « c » et « d » sont disposés de manière à ce que les angles au sommet « b » et « d » dudit triangle « bcd » sont toujours des angles aigus.

7. Véhicule de neige comprenant un châssis (2) et ayant une unité motrice (3) et un appareil de commande (6, 10, 11) installés dessus, **caractérisé en ce qu'**il comprend en outre un dispositif de suspension selon au moins un des revendications 1 à 6.

FIG. 1

FIG. 2

EP 1 431 165 B1

FIG. 3

EP 1 431 165 B1

FIG. 4

FIG. 5

FIG. 6

FIG. 7

EP 1 431 165 B1

FIG. 8

(a)

La
50e
50d
50b 50
50a
25
50c
51
15
52 55

A Normal range

(b)

50b 50e
50
50d
15
52 55

B Changing point

(c)

50d
50 50b
50e
La'
15
52 55

C Variable range

FIG. 9

Image of change in spring reaction

FIG. 10

Spring reaction → Large

Slide rail stroke → Large

Front attachment

● ● ● Locus of front attachment

Rear attachment

■ ■ ■ Locus of rear attachment

A

B

C

S1

EP 1 431 165 B1

FIG. 11a

$$F = F_F \cos\beta + F_R \cos\gamma = k(\theta - \theta_0)\left(\frac{\cos\beta}{L_1} + \frac{L_2'}{L_3 L_2}\cos\alpha \cdot \cos\gamma\right)$$

FIG. 11b

FIG. 12

EP 1 431 165 B1

Image of change in reaction

FIG. 13

EP 1 431 165 B1

(a)

Lmax→Lmin Image of Lmax to Lmin stroke (from full rebound state)

(b)

FIG. 14

Lmin Image of stroke with Lmax to Lmin constant (from full rebound state)

## Image of spring reaction

Large ↑ Spring reaction

Slide rail stroke → Large

Legend:
- - - L: constant
— L: variable

FIG. 15

Front stroke (force applied to front part)

FIG. 16

FIG. 17

Parallel stroke (force applied evenly)

FIG. 18

EP 1 431 165 B1

FIG. 19

Rear stroke (force applied to rear part)

FIG. 20

FIG. 21

Legend:
▪▪▪▪ Front portion before modification
▬ ▬ Rear portion before modification
▬▬ Front portion in this invention
▬▬ Rear portion in this invention

Significant drop = bottoming out

Large variation

SHOCK RATIO

Stroke of rear portion

FIG. 22

EP 1 431 165 B1

FIG. 23

FIG. 24

FIG. 25